(19) Europäisches Patentamt
European Patent Office
Office européen des brevets

(11) EP 0 870 775 B1

(12) **FASCICULE DE BREVET EUROPEEN**

(45) Date de publication et mention de la délivrance du brevet:
**11.12.2002 Bulletin 2002/50**

(51) Int Cl.[7]: **C08F 4/46**, C08F 4/58, C08F 20/12

(21) Numéro de dépôt: **98400578.5**

(22) Date de dépôt: **11.03.1998**

(54) **Système d'amorçage comprenant un amorceur silyle pour la (co)polymérisation anionique de monomères (méth)acryliques, et procédé l'utilisant**

Silyl-Initiator enthaltendes Initiatorsystem für die anionische (Co)Polymerisation von (Meth)Acryl Monomeren und Verfahren unter Verwendung desselben

Initiator system comprising a silyl initiator for the anionic (co)polymerisation of (meth)acrylic monomers and process using it

(84) Etats contractants désignés:
**BE CH DE ES FR GB IT LI NL SE**

(30) Priorité: **10.04.1997 FR 9704468**

(43) Date de publication de la demande:
**14.10.1998 Bulletin 1998/42**

(73) Titulaire: **Atofina**
**92800 Puteaux (FR)**

(72) Inventeurs:
- **Navarro, Christophe**
  **64520 Bidache (FR)**
- **Müller, Axel H.E.**
  **65193 Wiesbaden (DE)**
- **Maurer, Andreas R.**
  **61276 Weilrod (DE)**
- **Jerome, Robert**
  **4040 Tilff (BE)**
- **Zundel, Thomas**
  **68480 Durmenach (FR)**

(74) Mandataire: **Luziau, Nelly**
**ELF ATOCHEM S.A.,**
**Département Propriété Industrielle,**
**4-8, Cours Michelet,**
**La Défense 10 - Cedex 42**
**92091 Paris-La-Défense (FR)**

(56) Documents cités:
**EP-A- 0 462 588**
**US-A- 5 563 275**
**US-A- 5 605 991**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 870 775 B1

## Description

La présente invention concerne un système d'amorçage pour la polymérisation anionique de monomères (méth)acryliques, ce système étant particulièrement utilisable pour l'amorçage de la polymérisation anionique du méthacrylate de méthyle pour obtenir du poly(méthacrylate de méthyle) (PMMA) syndiotactique, pour l'amorçage de la polymérisation anionique d'acrylates monomères dont le carbone en $\alpha$ de l'oxygène de l'ester est tertiaire, secondaire et surtout primaire (on utilisera par la suite la désignation d'acrylate tertiaire, secondaire ou primaire), pour l'amorçage de la copolymérisation statistique ou séquencée des monomères (méth)acryliques, ainsi que pour la formation de copolymères en étoile, comprenant des branches formées de séquence(s) (méth)acrylique(s) liées à un coeur ou nodule formé à partir d'un composé multifonctionnel (par exemple un agent désactivant ou un monomère conduisant à un polymère réticulé ou non).

Dans la demande de brevet européen EP-A-0524054, est décrite la polymérisation anionique de (méth)acrylates d'alkyle à l'aide d'un système d'amorçage comprenant un amorceur monofonctionnel ou bifonctionnel et un ligand consistant en un alcoxyalcoolate de métal alcalin.

Avec ce procédé, la polymérisation est bien contrôlée, mais surtout à basse température.

La synthèse par voie anionique de PMMA syndiotactique ou de polyacrylates de masse et de polymolécularité contrôlées a nécessité l'emploi d'amorceurs stériquement "encombrés" pour éviter les réactions secondaires lors de l'amorçage. L'utilisation du butyllithium (n-, sec.-, tert.-) pur comme amorceur ne permettant pas d'obtenir une efficacité à l'amorçage supérieure à 20%, le système proposé jusqu'à maintenant comprenait généralement (1) l'amorceur 1,1-diphénylhexyllithium - produit de réaction du n-butyllithium avec le 1,1-diphényléthylène - et (2) un ligand alcoxyalcoolate tel que décrit dans le document EP-A-0524054. L'utilisation du 1,1-diphényléthylène rend ce procédé plus coûteux.

Le PMMA a intrinsèquement, c'est-à-dire lorsqu'il ne contient rien d'autre que les unités répétitives, une remarquable résistance au vieillissement. L'amorçage classique par le 1,1-diphénylhexyl-lithium- porteur de deux noyaux aromatiques - entraîne la présence de radicaux aromatiques fixés en début de chaîne du polymère. Il est bien connu que la présence de radicaux aromatiques diminue la tenue au vieillissement des polymères qui en contiennent, ce qui entraîne donc un inconvénient pour le PMMA.

Th. Zundel, J. Ming Yu, L. Lestel, D. Teyssié et S. Boileau, Macromol. Symp. 88, 177-189 (1994) ont décrit le triméthylsilylméthyllithium comme amorceur pour la polymérisation anionique des cyclosiloxanes et des monomères vinyliques. Bien qu'il soit indiqué dans cet article que ce composé organolithié peut aussi amorcer la polymérisation anionique du méthacrylate de méthyle, seuls quelques résultats préliminaires obtenus sont rapportés. Avec le méthacrylate de méthyle, les réactions secondaires sont importantes quand la polymérisation a lieu à 0°C selon le procédé décrit, ce qui entraîne une large distribution des masses molaires, quel que soit le solvant utilisé. Dans tous les cas, les masses molaires moyennes en nombre ($\overline{Mn}$) mesurées sont significativement supérieures aux valeurs théoriques. Cela vient probablement de la très faible vitesse d'amorçage comparée à la propagation. Une fraction conséquente d'amorceur reste inutilisée à l'achèvement de la polymérisation. Les microstructures d'échantillons de PMMA obtenus par ce procédé ont été analysées par RMN$^1$H. Elles sont similaires à celles observées classiquement pour des PMMA préparées avec des amorceurs du type organolithien. Un taux élevé de triades isotactiques est obtenu dans le toluène avec des contre-ions lithium. Par contre, les triades syndiotactiques sont prédominantes lorsque la polymérisation a lieu dans le THF à -78°C ou en ajoutant $AlEt_3$ à l'organolithien amorceur dans le toluène. Or, du PMMA à pourcentage élevé en triades syndiotactiques est intéressant, car le polymère a, alors, une température de transition vitreuse plus élevée et donc une plus grande tenue à la chaleur. Dans ce procédé antérieur, il n'est possible de préparer du PMMA qu'à des teneurs maximales en triades syndiotactiques de 67%, en travaillant en présence d'additif comme $AlEt_3$ pendant un temps très long (16 h), en milieu polaire, à très basse température. Ce procédé est donc loin de pouvoir être industrialisable.

Ainsi, la Société déposante a découvert qu'en associant un amorceur sylilé et en particulier le triméthylsilylméthyllithium, "mauvais amorceur" à un ligand consistant en un alcoolate de métal alcalin, notamment du type de celui décrit dans le document EP-A-0524054 ci-dessus, on obtient un système d'amorçage de la (co)polymérisation anionique des monomères (méth)acryliques qui présente de nombreux avantages et qui permet de résoudre les problèmes qui se posaient dans l'état antérieur de la technique.

La présente invention a donc d'abord pour objet un système d'amorçage pour la (co)polymérisation anionique de monomères (méth)acryliques comprenant

(1) au moins un amorceur silylé; et
(2) au moins un alcoolate de métal alcalin comme ligand.

L'amorceur silylé peut être monofonctionnel, étant alors choisi notamment parmi les composés de formule (I)

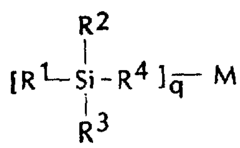 (I)

dans laquelle :

- $R^1$, $R^2$, $R^3$ représentent, chacun, indépendamment, un radical alkyle, linéaire ou ramifié, contenant 1 à 8 atomes de carbone ;
- $R^4$ représente un radical alkylène linéaire ou ramifié, contenant 1 à 8 atomes de carbone ;
- M désigne un métal alcalin ou alcalino-terreux (valence q de 1 ou 2).

L'amorceur silylé peut également être bifonctionnel, étant alors choisi notamment parmi les composés de formule (II) :

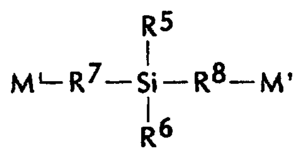 (II)

dans laquelle :

- $R^5$ et $R^6$ représentent, chacun, indépendamment, un radical alkyle, linéaire ou ramifié, contenant 1 à 8 atomes de carbone ;
- $R^7$ et $R^8$ représentent, chacun, indépendamment, un radical alkylène, linéaire ou ramifié, contenant 1 à 8 atomes de carbone ; et
- M' désigne un métal alcalin.

Dans les formules (I) ou (II) ci-dessus, $R^1$, $R^2$, $R^3$, $R^5$ et $R^6$ représentent, chacun, de préférence, un radical alkyle ayant de préférence de 1 à 4 atomes de carbone et tout particulièrement un radical méthyle ; $R^4$, $R^7$ et $R^8$ représentent, chacun, de préférence, un radical alkylène ayant 1 ou 2 atomes de carbone et particulièrement le radical méthylène, et M et M' représentent, chacun, de préférence le lithium. Un amorceur particulièrement approprié est le triméthylsilylméthyllithium.

Quant aux alcoolates de métaux alcalins (2), on peut notamment les choisir parmi ceux de formule (III) :

$$ROM'' \qquad (III)$$

dans laquelle:

- M" représente un métal alcalin ; et
- R représente un radical de formule (IV) :

$$R^9(OR^{10})_p \qquad (IV)$$

dans laquelle :

- $R^9$ représente un radical alkyle, linéaire ou ramifié, ayant de 1 à 8 atomes de carbone, un radical aryle, un radical arylalkyle, ou alkylaryle dans lesquels le groupe alkyle a de 1 à 8 atomes de carbone ;
- $R^{10}$ représente un radical alkylène, linéaire ou ramifié, ayant de 1 à 4 atomes de carbone ;
- p est le nombre entier 0, 1, 2 ou 3 ; et
- lorsque p vaut 2 ou 3, les $R^{10}$ sont identiques ou différents.

Dans la formule (III), M" représente particulièrement le lithium.

Dans la formule (IV), $R^9$ représente, par exemple, un radical méthyle, éthyle, propyle, butyle, pentyle, hexyle, heptyle, octyle, phényle, benzyle, et notamment méthyle. $R^{10}$ représente, par exemple, un radical méthylène, éthylène, propylène, butylène, isopropylène, et notamment éthylène.

Le système d'amorçage selon la présente invention permet la synthèse d'un PMMA à teneur élevée en triades syndiotactiques (≥70%), en milieu apolaire, ou majoritairement apolaire, à des températures et avec des durées de synthèse raisonnables.

Il permet la synthèse de poly(méth)acrylates, et notamment de polyacrylates primaires, de masse et de polymolécularité contrôlées.

De par la structure même des amorceurs silylés, les polymères obtenus ont une tenue au vieillissement améliorée, contrairement aux polymères obtenus en présence de 1,1-diphénylhexyllithium, comme indiqué précédemment.

Dans les mêmes conditions de polymérisation, l'association amorceur silylé + ligand lithié précité est plus efficace que l'association amorceur classique 1,1-diphénylhexyllithium + ligand lithié précité. Il est alors possible d'avoir une efficacité équivalente à l'ancien système, avec le nouvel amorceur en présence de moins de ligand lithié. Outre une répercution importante sur le coût de l'amorçage, cela implique une forte diminution des espèces lithiées présentes dans le polymère.

Le rapport molaire alcoolate (2)/amorceur (1) dans le système d'amorçage selon la présente invention peut varier dans des limites très larges. La quantité d'alcoolate (2) doit être suffisante pour permettre la formation d'un complexe avec le centre actif de polymérisation et, ainsi, stabiliser ce dernier. La quantité d'alcoolate (2) dépend de l'amorceur (1) choisi et du ou des monomères à polymériser. Le rapport molaire alcoolate (2)/amorceur (1) selon l'invention est généralement compris entre 1 et 20 ; pour l'obtention de meilleurs résultats, ce rapport est compris, de préférence, entre 2 et 10.

La présente invention porte également sur un procédé de (co)polymérisation de monomères (méth)acryliques par voie anionique, caractérisé par le fait qu'on conduit la (co)polymérisation en présence d'un système d'amorçage tel que défini ci-dessus.

La température de polymérisation peut varier entre -100°C et +100°C environ et, de préférence, elle est inférieure à -20°C environ pour les acrylates et à +30°C pour les méthacrylates.

La polymérisation, réalisée en présence du système d'amorçage selon l'invention, a lieu, de préférence, en l'absence d'humidité et d'oxygène, et en présence d'au moins un solvant , non protique, choisi, de préférence, parmi le benzène, le toluène, l'éthylbenzène, le tétrahydrofuranne, le diglyme, le tétraglyme, l'orthoterphényle, le biphényle, la décaline, la tétraline ou leurs mélanges ; on peut utiliser avantageusement le toluène ou l'éthylbenzène ou un mélange toluène-tétrahydrofuranne ou éthylbenzène-tétrahydrofuranne, le mélange pouvant contenir , en particulier, jusqu'à 10% en volume de tétrahydrofuranne.

Le système d'amorçage selon l'invention permet une conversion totale des monomères en une durée inférieure, généralement très inférieure, à 30 minutes, cette durée étant dépendante de la température. Dans le cas de la polymérisation des acrylates, cette durée peut être très inférieure à une seconde.

La polymérisation selon l'invention est possible en réacteurs du type batch ou tubulaire, mais elle n'est pas limitée à ceux-ci ; elle peut être isotherme ou adiabatique.

Elle peut avoir lieu, en continu, comme décrit dans la demande de brevet EP-A-0749987 et, dans ce cas, le ou les monomère(s) à polymériser et le système d'amorçage sont d'abord mélangés dans un micromélangeur (par exemple, micromélangeur de type cyclone ou à jets tangentiels, du type à jets d'impacts), puis le mélange est injecté dans le réacteur de (co)polymérisation. La durée du séjour du ou des monomère(s) et du système d'amorcage dans le micromélangeur est inférieure au temps de (co)polymérisation.

Par le procédé selon l'invention, on peut former des homopolymères, des copolymères statistiques ou des copolymères séquencés ou copolymères en étoile comprenant des branches formées de (co)polymères séquencés ou statistiques.

Les monomères que l'on peut (co)polymériser par le procédé de l'invention sont choisis parmi les monomères (méth)acryliques.

Le terme "monomère (méth)acrylique", tel qu'employé ci-dessus, signifie un monomère choisi parmi les (méth) acrylates des formules respectivement :

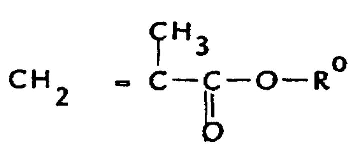

et

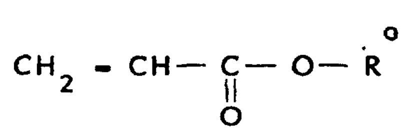

dans lesquelles R° est choisi parmi les radicaux alkyle en $C_1$-$C_{18}$, linéaires ou ramifiés, primaires, secondaires ou tertiaires, cycloalkyle en $C_5$-$C_{18}$, alcoxyalkyle et alkylthioalkyle dans lesquels le groupe alkyle, linéaire ou ramifié, a de 1 à 18 atomes de carbone, aryle et arylalkyle, ces radicaux étant éventuellement substitués par au moins un atome de fluor et/ou au moins un groupe hydroxyle après protection de ce groupe hydroxyle ; les (méth)acrylates de glycidyle, de norbomyle, d'isobornyle, les mono- et di-(alkyl en $C_1$-$C_{18}$)-(méth)acrylamides.

Comme exemples de méthacrylates utiles, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle, de β-hydroxy-éthyle, d'isobornyle, d'hydroxypropyle, d'hydroxybutyle. Le monomère méthacrylique préféré est le méthacrylate de méthyle.

Comme exemples d'acrylates de la formule ci-dessus, on peut citer les acrylates de méthyle, d'éthyle, de n-propyle, d'isopropyle, de n-butyle, de sec.-butyle, de tert.-butyle, d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.

En particulier, le système d'amorçage selon l'invention permet de préparer des polymères de méthacrylate de méthyle (PMMA) ayant une masse molaire moyenne en nombre ($\overline{Mn}$) comprise entre 200 et $10^6$ g/mole et un indice de polymolécularité Ip ($\overline{Mw}/\overline{Mn}$) compris entre 1,05 et 2,6. Les PMMA peuvent avoir des pourcentages en triades syndiotactiques supérieurs ou égaux à 70% même dans un solvant apolaire ou majoritairement apolaire, ce qui leur confère une température de transition vitreuse d'environ 130°C, et donc une plus haute résistance à la chaleur que des PMMA préparés par polymérisation radicalaire.

Il est aussi possible d'obtenir, avec des rendements élevés, des polymères d'acrylate d'alkyle ayant notamment une masse molaire moyenne en nombre ($\overline{Mn}$) comprise entre 500 et 500 000 g/mole et un Ip ($\overline{Mw}/\overline{Mn}$) compris entre 1,05 et 2,6. Ces homopolymères sont vivants, ce qui permet de préparer des copolymères séquencés.

Les exemples suivants illustrent la présente invention. Dans les exemples, on a utilisé les abréviations suivantes :

- nBuA et PnBuA = acrylate de n-butyle et poly(acrylate de n-butyle).
- MMA et PMMA = méthacrylate de méthyle et poly(méthacrylate de méthyle).
- TMSM-Li = triméthylsilylméthyllithium.
- DPE - 1,1-diphényléthylène.
- BuLi = n-butyllithium.
- DPH-Li = 1,1-diphénylhexyllithium.
- THF = tétrahydrofuranne.
- $[A]_0$ = concentration initiale de l'amorceur.
- [L] = concentration du ligand.
- $[M]_0$ = concentration initiale du monomère.
- $M_0$ = masse molaire du monomère.
- $\overline{Mn}_{théorique} = M_o \times \frac{[M]_O}{[A]_O} \times X_p$
- Xp = taux de conversion
- Efficacité de l'amorceur $f = \frac{\overline{Mn}_{théorique}}{\overline{Mn}_{expérimentale}}$

Dans les exemples donnés ci-après, les alcoolates utilisés sont $CH_3(OCH_2CH_2)OLi$ ou $CH_3(OCH_2CH_2)_2OLi$.

Pour préparer le 2-méthoxyéthoxylate de lithium, $CH_3(OCH_2CH_2)OLi$, on a procédé selon l'Exemple a ou b ci-dessous :

*Exemple a*

Dans un ballon de 500 ml à deux cols, muni d'un réfrigérant et préalablement séché sous atmosphère d'argon, on introduit 250 ml de THF distillé sur sodium ainsi que 3,5 g (0,5 mole, 2 éq.) de lithium métallique, préalablement décapé. On introduit ensuite 30 ml (0,25 mole) de méthoxyéthanol préalablement séché sur $CaH_2$, par petites portions. Le mélange est reflué pendant 12 heures, après quoi on transvase la solution dans un ballon à un col, à l'aide d'une aiguille capillaire. Cette solution d'environ 1M est conservée à 0°C dans l'obscurité.

*Exemple b*

Dans un ballon de 500 ml préalablement séché sous atmosphère d'argon, on introduit 250 ml de THF distillé sur sodium ainsi que 0,25 mole de méthoxyéthanol préalablement séché sur $CaH_2$. On introduit ensuite par petites portions, à température ambiante, 0,25 mole de BuLi en solution dans le n-hexane. Après 5 minutes, la solution peut

être stockée ou utilisée telle quelle pour la polymérisation.

Pour préparer le 2-méthoxyéthoxyéthoxylate de lithium, on a procédé selon l'exemple c ou d ci-dessous :

*Exemple c*

On ajoute 0,5 mole d'alcool $MeOCH_2CH_2OCH_2CH_2OH$ à 500 ml de cyclohexane. L'alcoolate est préparé par réaction de l'alcool avec 0,5 mole de BuLi en présence de quelques gouttes de diphényléthylène (DPE). Ce composé agit comme indicateur coloré (réaction de BuLi + DPE), indiquant l'absence d'alcool.

*Exemple d*

On obtient 0,5 mole de $MeOCH_2CH_2OCH_2CH_2OLi$ par réaction de 0,5 mole de $MeOCH_2CH_2OCH_2CH_2OH$ sur une mole de lithium métal dans 500 ml de THF.

La durée de réaction est de 12 heures, suivie de 6 heures à reflux. Le THF est éliminé par distillation. On ajoute la quantité voulue de cyclohexane pour amener la solution à la concentration voulue. La conversion est de 100%.

Les masses molaires et les Ip sont basés sur des mesures de GPC, comme indiqué à l'Exemple 1. Dans cet exemple, figure aussi le mode de calcul de la conversion $x_p$ du monomère.

**Exemple 1 : Synthèse du PnBuA avec le TMSM-Li comme amorceur en présence de 2-méthoxyéthoxylate de lithium comme ligand**

On évite toutes traces d'impuretés (humidité, oxygène, ...) dans le système ; pour cela, tous les réactifs ont été purifiés comme décrit ci-dessous, dégazés et maintenus sous azote pur.

Le nBuA est tout d'abord séché sur hydrure de calcium ($CaH_2$) et distillé sous pression réduite (45 mbar) en présence de 3-(3,5-di-tert.-butyl-4-hydroxyphényl)propionate d'octadécyle en tant qu'inhibiteur de polymérisation non-volatil. Après dégazage, il est agité pendant au moins une nuit sur $CaH_2$ refroidi par un bain de glace, dégazé à nouveau et conservé à -18°C. Ensuite, il est distillé à partir du $CaH_2$ juste avant utilisation.

On a utilisé du TMSM-Li 1,0 molaire dans le pentane.

Le toluène et le THF ont été fractionnés, puis portés à reflux sur du potassium et introduits dans un ballon à fond rond relié à une canalisation sous vide. Après dégazage, le mélange a été agité avec 5 ppm de benzophénone sur un alliage sodium/potassium (1/3) jusqu'à ce que la solution devienne bleue, puis il a été distillé à nouveau juste avant utilisation.

Le n-octane est utilisé comme étalon interne pour l'analyse par chromatographie en phase gazeuse du monomère résiduel. Il est dégazé, séché par agitation sur un alliage sodium/potassium (1/3) avec 5 ppm de benzophénone et distillé dans une ampoule équipée d'une valve en Téflon®.

2 ml de 2-méthoxyéthanol anhydre et 1 goutte de DPE ont été ajoutés à 32 ml de toluène et refroidis à 0°C. 16 ml de n-butyllithium (1,6 M dans l'hexane) ont été ajoutés goutte à goutte au mélange sous azote pur jusqu'à ce qu'un léger rouge subsiste.

Dans une boîte à gants, dans une première ampoule 1,1 ml de TMSM-Li et 11 ml de 2-méthoxyéthoxylate de lithium ont été ajoutés à un mélange de 510 ml de toluène et 27,5 ml de THF ($[A]_0 = 10^{-3}$ mole/l ; $[L]/[A]_0 = 5$). Une deuxième ampoule, équipée d'une valve en Téflon®, a été remplie par 29,3 ml de nBuA, 10,7 ml de n-octane et 490 ml de toluène ($[M]_0 = 0,2$ mole/l). Une troisième ampoule, munie d'une valve en Téflon® est remplie d'agent de terminaison, c'est-à-dire une solution de méthanol acidifié par de l'acide acédique (0,5 % v/v).

Ces trois ampoules ont été reliées à un récipient de stockage d'un réacteur tubulaire. Les parties principales du réacteur consistent en trois burettes contenant les réactifs. Un moteur actionne simultanément les pistons des trois burettes et entraîne les solutions à travers une chambre de mélange (temps de mélange < 1 ms) et un réacteur tubulaire. Avant d'atteindre la chambre de mélange (mélangeur à quatre jets avec entrée tangentielle, volume de 1 µl), les solutions sont amenées à la température de réaction désirée par écoulement à travers 5 m de capillaires dans un bain thermostaté. Ensuite, les solutions (système d'amorçage et monomère) s'écoulent dans le réacteur tubulaire. On peut choisir les temps de séjour (compris entre 2 x $10^{-3}$ et 20 secondes) dans le réacteur tubulaire en changeant la longueur "l" (4,4-500 cm) et le diamètre "d" (0,5-2 mm) des tubes, ou le débit (1,3 à 5 ml/s). A l'extrémité du réacteur tubulaire, un tube de terminaison brusque est connecté, lequel mélange la solution de méthanol acidifiée par de l'acide acétique (0,5% v/v) à la solution réactionnelle. La température dans la tuyère de mélange $T_M$ et celle dans le tube de terminaison brusque $T_Q$ peuvent être déterminées par l'utilisation de thermocouples Philips Thermocoax (diamètre externe de 0,5 mm).

La température $T_{eff}$ est liée par la relation $T_{eff} = T_M + 0,55 (T_Q - T_M)$ avec $T_M$ = température du mélange et $T_Q$ = température de terminaison. Cette température indique la température de la polymérisation.

Les conditions expérimentales exactes et les résultats pour le système décrit sont donnés dans le Tableau 1

suivant.

Tableau 1

| Ex | l (cm) | débit ($cm^3.s^{-1}$) | d (mm) | t (ms) | conversion $x_p$ | $T_M$ (°C) | $T_Q$ (°C) | $T_{eff}$ (°C) | $\overline{Mn}$ calc | $\overline{Mn}_{exp}$ sans oligomères | Ip sans oligomères |
|---|---|---|---|---|---|---|---|---|---|---|---|
| 1a | 4,4 | 4,42 | 0,5 | 1,95 | 0,20 | -31,1 | -27,9 | -29,3 | 5227 | 6500 | 1,51 |
| 1b | 4,4 | 4,85 | 1,0 | 7,12 | 0,25 | -31,3 | -28,1 | -29,5 | 6426 | 8400 | 1,32 |
| 1c | 4,4 | 3,57 | 1,0 | 9,68 | 0,35 | -32,3 | -27,6 | -29,7 | 8928 | 11500 | 1,23 |
| 1d | 8,4 | 4,85 | 1,0 | 13,60 | 0,57 | -30,6 | -23,7 | -26,8 | 14660 | 20200 | 1,11 |
| 1e | 8,4 | 3,57 | 1,0 | 18,47 | 0,65 | -33,0 | -25,7 | -29,0 | 16783 | 22400 | 1,10 |
| 1f | 8,4 | 2,42 | 1,0 | 27,25 | 0,78 | -33,8 | -25,0 | -28,9 | 20115 | 26400 | 1,08 |
| 1g | 16,4 | 2,80 | 1,0 | 45,98 | 0,91 | -33,3 | -22,5 | -27,3 | 23360 | 31300 | 1,09 |
| 1h | 32,4 | 2,42 | 1,0 | 105,10 | 1,00 | -32,3 | -19,6 | -25,3 | 25634 | 32900 | 1,05 |

$\overline{Mn}$ en g/mole

Immédiatement après échantillonnage, 1 µl des solutions de polymère brut est injecté dans un appareil de chromatographie en phase gazeuse de type Fisons GC 8160, colonne capillaire DB-1, longueur 30 m, diamètre interne : 0,53 mm, épaisseur de film 1,5 µm, FID. Le rapport des surfaces de pic de monomère résiduel et de n-octane, respectivement $F_{monomère}$ et $F_{octane}$, conduit à la conversion $x_p$ du monomère.

$$Xp = 1 - \frac{\left[\frac{F_{monomère}}{F_{octane}}\right]_t}{\left[\frac{F_{monomère}}{F_{octane}}\right]_o}$$

Le reste des solutions brutes est traité afin d'obtenir un polymère pur. Le premier stade de ce traitement consiste en l'évaporation du (ou des) solvant(s) et du monomère résiduel dans un évaporateur rotatif à 30°C. Ensuite, les produits restants sont dissous dans le benzène, et filtrés à travers un papier filtre. Finalement, la solution de benzène contenant le polymère est lyophilisée et un gel est obtenu.

Pour les mesures de GPC, 10 mg du polymère sont dissous dans 5 ml de THF contenant 20 ppm de toluène comme étalon interne. Pour corriger le retrait ou la dilatation du gel ou des changements du débit, pour chaque échantillon, le volume d'élution a dû être corrigé en relation avec le pic de l'étalon interne.

$$V_{e,\,corr\cdot} = V_{e,exp}\,\frac{V_{e,cal}{}^{tol}}{V_{e,exp}{}^{tol}}$$

$V_{e,corr}$ = volume d'élution corrigé
$V_{e,exp}$ = volume d'élution expérimental
$V_{e,caltol}$ = volume d'élution du toluène de l'étalonnage
$V_{e,exptol}$ = volume d'élution du toluène de l'échantillon.

100 µl des solutions échantillons sont injectés sur une combinaison de colonnes (solvant : THF, débit : 60 ml/h ; 2 Colonnes 60 cm 5µPSS-DV-Gel, 10nm ) à la température ambiante (Détecteurs UV Jasco-Uvidec 100 III et indice de réfraction Bischoff RI-Detektor 8110). L'ensemble de colonnes est étalonné avec des étalons de PnBuA.

Des mesures MALDI-TOF MS ont été effectuées avec un spectromètre de masse Bruker Reflex, équipé d'un laser à azote délivrant des impulsions laser de 3 ns à 337 nm. Les mesures ont été enregistrées en mode réflectron (matrice 1,8,9-trihydroxyanthracène). Pour la détection d'ions positifs, du trifluoroacétate de rubidium a été ajouté à la solution polymère/matrice. 1 µl du mélange a été appliqué à la cible multistage et séché à l'air. La tension d'accélération était de 33,65 kV et les ions ont été réfléchis avec 35 kV. On a pris la moyenne des spectres sur 80 coups.

Les éluogrammes de GPC des polymères obtenus montrent un pic de masse moléculaire élevé étroit. Les spectres de masses MALDI-TOF montrent seulement les signaux attendus pour les polymères linéaires, indiquant que la polymérisation est vivante. En outre, il y a une petite fraction d'oligomères (M<1000g/mole), lesquels représentent moins de 2% de la masse totale.

La GPC révèle la présence de faibles quantités d'oligomères ; celles-ci, étant difficiles à intégrer dans le calcul des masses molaires moyennes, ne sont pas prises en compte.

L'efficacité (f) de l'amorceur a été déterminée à partir de la pente de la courbe du degré de polymérisation moyen en nombre en fonction de la conversion comme étant f ≃ 0,74.

**Exemple 2 (comparatif) : Synthèse du PnBuA avec le DPH-Li en présence de 2-méthoxyéthoxylate de lithium comme ligand**

Du DPE (97%) a été séché par addition de n-butyllithium goutte à goutte jusqu'à ce que la couleur rouge caractéristique du DPH-Li ait persisté. Ensuite, le DPE a été distillé sous pression réduite dans une ampoule avec une valve en Téflon®.

Pour préparer un amorceur DPH-Li solide, 16 ml de n-butyllithium et 5 ml de DPE ont été ajoutés à 79 ml d'hexane dans une boîte à gants à la température ambiante. La solution a été agitée pendant deux jours, et le précipité rouge a été filtré, lavé deux fois avec de l'hexane et séché pendant une nuit sous vide. La poudre rouge a été maintenue sous atmosphère d'azote à -18°C. juste avant utilisation, la quantité calculée de DPH-Li a été dissoute dans le toluène.

On a procédé comme à l'exemple 1 en remplaçant le TMSM-Li par le DPH-Li, les conditions expérimentales exactes et les résultats pour le système : DPH-Li ($[A]_0 = 10^{-3}$ mole/l), nBuA ($[M]_0$ = 0,2 mole/l), 2-méthoxy-éthoxylate de lithium ($[L]/[A]_0$ = 5) dans le toluène pur, étant indiqués ci-dessous dans le Tableau 2. Le diamètre des tubes utilisé

était de 1 mm.

Tableau 2

| Ex | l (cm) | débit ($cm^3.s^{-1}$) | t (sec) | conversion $x_p$ | $T_M$ (°C) | $T_Q$ (°C) | $T_{eff}$ (°C) | $\overline{Mn}$ calc | $\overline{Mn}_{exp}$ sans oligomères | Ip sans oligomères |
|---|---|---|---|---|---|---|---|---|---|---|
| 2a | 16,4 | 4,42 | 0,0291 | 0,641 | -28,4 | -20,7 | -24,2 | 16431 | 33200 | 1,10 |
| 2b | 32,4 | 4,42 | 0,0575 | 0,814 | -28,9 | -18,7 | -23,3 | 20866 | 40700 | 1,15 |
| 2c | 32,4 | 2,80 | 1,0908 | 0,877 | -31,3 | -19,2 | -24,6 | 22481 | 44000 | 1,20 |
| 2d | 64,4 | 3,98 | 1,1270 | 0,916 | -30,6 | -19,7 | -24,6 | 23481 | 48360 | 1,16 |
| 2e | 64,4 | 2,80 | 1,1806 | 0,941 | -30,8 | -19,6 | -24,6 | 24122 | 50100 | 1,16 |

$\overline{Mn}$ en g/mole

Les éluogrammes des polymères obtenus montrent un indice de polydispersité plus élevé pour le pic de masse moléculaire élevé que pour les systèmes amorcés par TMSM-Li. Les MALDI-TOF MS des polymères amorcés par le DPH-Li montrent les signaux attendus pour des polymères linéaires et, en plus, des masses de -groupes terminaux β-cétoester cycliques, indiquant une compétition de la terminaison avec la propagation. Ceci est également indiqué par la courbure vers le bas de la courbe temps-conversion du premier ordre. De plus, il y a une fraction plus élevée d'oligomères (M< 1000 g/mole), lesquels représentent 5-10% de la masse totale.

L'efficacité (f) de l'amorceur a été déterminée à partir de la pente de la courbe du degré de polymérisation moyen en nombre en fonction de la conversion, comme étant f=0,47. Cette efficacité est significativement inférieure à celle obtenue avec le TMSM-Li.

En conclusion, de la comparaison avec le système amorcé par DPH-Li dans le toluène pur, le système amorcé par TMSM-Li représente une polymérisation vivante idéale (pas de réaction de terminaison conformément aux mesures de MALDI-TOF MS et courbe temps-conversion du premier ordre linéaire), avec une distribution plus étroite des masses moléculaires, une efficacité d'amorçage supérieure et une plus petite quantité d'oligomères.

**<u>Exemple 3</u> : Synthèse du PMMA avec le TMSM-Li comme amorceur en présence de 2-méthoxyéthoxylate de lithium comme ligand**

Cette synthèse est réalisée selon le procédé décrit dans le document EP-A-0749987.

*<u>Conditions opératoires</u>* :

$[MMA]_o$ = 30 % en poids dans le toluène
Solvant = toluène/THF : 94 % / 6 % (v/v) -
$[L]/[A]_o = 4$
$[A]_o = 5,1 \times 10^{-3}$ mole/litre

Le monomère et le système d'amorçage sont chacun, entrainés, à un débit de 12kg/h dans un micromélangeur. Le temps de séjour dans le micromélangeur est de 0,05s ; puis le mélange est conduit dans un réacteur de polymérisation. La polymérisation a lieu à -32°C pendant moins d'une seconde.

Les résultats sont rapportés dans le Tableau 3.

**<u>Exemple 4 (comparatif)</u>**

On procède comme à l'Exemple 3, excepté que l'on utilise le DPH-Li comme amorceur au lieu du TMSM-Li avec $[DPH\text{-}Li]_o = 7,9 \times 10^{-3}$ mole/litre.

Les résultats sont rapportés dans le Tableau 3.

Tableau 3

| Ex | $[L]/[A]_o$ | $\overline{Mn}$ théorique | $\overline{Mn}$ réelle | Ip | f | Taux de conversion* (%) |
|---|---|---|---|---|---|---|
| 3 (invention) | 4 | 58600 | 74200 | 1,7 | 0,79 | 100 |
| 4 (comparatif) | 4 | 37800 | 50000 | 2,7 | 0,76 | 97,9 |

* Ce taux de conversion est calculé comme à l'Exemple 1.

Dans le cas de ces Exemples 3 et 4, l'ensemble des colonnes est étalonné avec des étalons de PMMA.

$\overline{Mn}$ en g/mole

**Exemple 5 : Polymérisation du MMA avec le TMSM-Li comme amorceur en présence de méthoxyéthoxylate de lithium comme ligand**

Le réacteur est une cuve en verre d'une capacité d'un litre, avec une vanne de fond pour la vidange, et une ouverture avec septum pour l'injection de méthoxyéthanol et de TMSM-Li. Par l'intermédiaire de pompes, le solvant (3% THF/97% toluène) et le MMA, préalablement purifiés, sont introduits sous balayage d'azote.

Le rapport $[L]/[A]_0$ est de 5.

Avant chaque synthèse, le réacteur est purgé par trois vide-azote successifs. Le réacteur est chargé en solvant sous balayage d'azote avec une agitation de 250 tours/min. On effectue sur le solvant à température ambiante un point zéro à l'aide d'une solution de DPH-Li à 0,2 M. Quand le point zéro est stable (coloration orangée), on met à refroidir le réacteur à -20°C pour préparer le méthoxyéthoxylate de lithium.

Une fois la température atteinte, on introduit le méthoxyéthanol avec une pression de 0,1 bar dans le réacteur ; la solution devient incolore. On ajoute goutte à goutte le n-butyllithium jusqu'à neutralisation de l'alcool (la solution redevient orangée), en surveillant que la température ne dépasse pas -5°C. On introduit la quantité voulue d'amorceur (solution de TMSM-Li dans du toluène à 1M). Quand le réacteur est à une température comprise entre -20°C et -10°C, la solution de MMA est additionnée goutte à goutte au départ, et au moment de la décoloration de la solution, on augmente la vitesse d'agitation à 500 tours/min ainsi que la vitesse d'addition du monomère. Le temps d'introduction du MMA est d'environ 5 minutes. Une fois la réaction terminée, le polymère est désactivé par ajout de méthanol. Le réacteur peut alors être vidangé. Le rendement est de 100%.

Les résultats sont rapportés dans le Tableau 4.

**Exemple 6 (comparatif)**

On procède comme à l'Exemple 5 en remplaçant la solution de TMSM-Li 1M par une solution de DPH-Li à 0,2M. Le rendement est de 100 %

Les résultats sont rapportés dans le Tableau 4.

Tableau 4

| | Ex | Ip | % r.r.* |
|---|---|---|---|
| | 5 (invention) | 2,0 | 81,0 |
| | 6 (comparatif) | 2,4 | 77,0 |

* Le % r.r. (taux de syndiotacticité) est calculé par RMN $^1H$.

Ce Tableau 4 permet de comparer le taux de syndiotacticité (triades syndiotactiques) obtenu pour un PMMA amorcé par les systèmes respectivement TMSM-Li et DPH-Li.

**Exemples 7 (de l'invention) et 8 (comparatif)**

On procède comme pour les Exemples respectivement 3 et 4 en tenant compte de la quantité de ligand nécessaire au contrôle de la polymérisation et pour obtenir une masse molaire moyenne en nombre de 50 000 g/mole. Le solvant est le mélange 6% THF/94% toluène.

Les résultats sont rapportés dans le Tableau 5 et montrent un taux de lithium résiduel moindre dans le PMMA de l'invention.

Tableau 5

| Ex | $[L]/[A]_o$ | f | Ip | Rendement (%) | mg lithium/ kg de PMMA |
|---|---|---|---|---|---|
| 7 (invention) | 2 | 0,72 | 2,5 | 100% | 600 |
| 8 (comparatif) | 5 | 0,89 | 2,4 | 100% | 1000 |

**Exemples 9 (de l'invention) et 10 (comparatif)**

On procède comme pour les Exemples respectivement 3 et 4 en diminuant le rapport $[L]/[A]_0$.

Dans le cas de l'Exemple 9, $[L]/[A]_o = 2$, on obtient les résultats suivants : f = 0,72, Ip = 2,5 et rendement 100%.

Dans le cas de l'Exemple 10, le DPH-Li précipite pour une valeur $[L]/[A]_0<3$.

**Exemple 11**

On procède exactement comme à l'Exemple 1 pour polymériser l'acrylate de tertio-butyle à -21°C dans un milieu 2,5% THF/97,5% toluène avec $[L]/[A]_0 = 5$.
Les résultats sont les suivants pour une Xp de 1,00, on a :

- f = 0,61
- Ip = 1,15

**Exemple 12 :** Polymérisation du MMA à 0°C, amorcée par TMSM-Li dans un milieu 100% toluène avec $CH_3(OCH_2CH_2)_2OLi$

Dans un réacteur batch, sous atmosphère inerte, on introduit à la température de 0°C : 2,58 x $10^{-3}$ mole de $CH_3(OCH_2CH_2)_2OLi$ dans 80 ml de toluène et 0,25 x $10^{-3}$ mole de TMSM-Li. Après 25 minutes à 0°C, on ajoute 4,2 g de MMA, et après 60 minutes de réaction, le PMMA obtenu a les caractéristiques suivantes :
Rendement 92%

$\overline{Mn}$ = 16 200 g/mole
f = 0,95
Ip = 2,6.

**Exemple 13** : Synthèse d'un copolymère à blocs PMMA-b-PnBuA

Les études de cinétique pour le n-BuA à T - -20°C indiquent que la réaction est extrêmement rapide ($t_{1/2}$ < 0,01 s), mais peut être aisément contrôlée à l'aide de l'appareillage tel que décrit à l'Exemple 1.
Les anions PMMA vivants ont été utilisés pour amorcer le nBuA dans une deuxième chambre de mélange comme décrit à l'exemple 1, à T - -10°C.
La Figure 1 du dessin annexé représente les résultats obtenus en GPC du PMMA-b-PnBuA :

*Conditions expérimentales* :

[L]/[A)o = 10
Solvant = toluène
$T_{eff}$ = 10°C

*1 - Séquence PMMA vivant*

Amorceur : [TMSM-Li] = $10^{-3}$ mole/l
$[MMA)_o$ = 0,05 ml/l
Xp du bloc PMMA vivant = 1,00
PMMA vivant = $\overline{Mn}$ = 7500, $\overline{Mw}/\overline{Mn}$ = 1,25 (courbe 1)

2 -Séquence *PnBuA*

Amorceur : [PMMA vivant ] = 6,7 x $10^{-4}$ mole/l
$[nBuA]_0$ = 0,067 ml/l
PMMA-b-PnBuA : $\overline{Mn}$ = 27 000 ; $\overline{Mw}/\overline{Mn}$ = 1,35 (courbe 2)

Les résultats obtenus en GPC montrent une efficacité de couplage de la deuxième séquence (PnBuA) par la première séquence (PMMA vivant) supérieure à 95 % et une distribution moléculaire étroite du copolymère à blocs.

## Revendications

1. Système d'amorçage pour la (co)polymérisation anionique de monomères (méth)acryliques comprenant (1) au moins un alcoolate de métal alcalin comme ligand et (2) soit un ou plusieurs amorceur(s) monofonctionnel(s), soit un ou plusieurs amorceur(s) bifonctionnel(s), **caractérisé en ce que** ces amorceurs sont des composés silylés choisis parmi :

   - les amorceurs silylés monofonctionnels de formule (I) :

     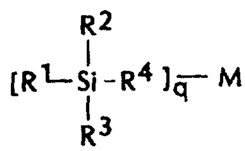

     (I)

     dans laquelle :

     - $R^1$, $R^2$, $R^3$ représentent, chacun, indépendamment, un radical alkyle, linéaire ou ramifié, contenant 1 à 8 atomes de carbone ;
     - $R^4$ représente un radical alkylène linéaire ou ramifié, contenant 1 à 8 atomes de carbone ;
     - M désigne un métal alcalin ou alcalino-terreux (valence q de 1 ou 2), ou bien

   - les amorceurs silylés bifonctionnels de formule (II) :

     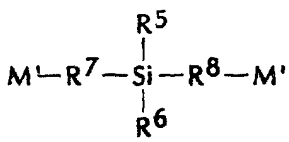

     (II)

     dans laquelle :

     - $R^5$ et $R^6$ représentent, chacun, indépendamment, un radical alkyle, linéaire ou ramifié, contenant 1 à 8 atomes de carbone ;
     - $R^7$ et $R^8$ représentent, chacun, indépendamment, un radical alkylène, linéaire ou ramifié, contenant 1 à 8 atomes de carbone; et
     - M'désigne un métal alcalin.

2. Système d'amorçage selon la revendication 1, **caractérisé par le fait que** $R^1$, $R^2$, $R^3$, $R^5$ et $R^6$ représentent, chacun, un méthyle.

3. Système d'amorçage selon l'une des revendications 1 et 2, **caractérisé par le fait que** $R^4$, $R^7$ et $R^8$ représentent, chacun, un méthylène.

4. Système d'amorçage selon l'une des revendications 1 à 3, **caractérisé par le fait que** M et M' représentent, chacun, le lithium.

5. Système d'amorçage selon l'une des revendications 1 à 4, **caractérisé par le fait que** le ou les alcoolates de métal alcalin (1) sont choisis parmi ceux de formule (III)

$$ROM'' \qquad (III)$$

   dans laquelle :

   - M" représente un métal alcalin et

- R représente un radical de formule (IV):

$$R^9(OR^{10})_p \quad (IV)$$

dans laquelle :

- $R^9$ représente un radical alkyle, linéaire ou ramifié, ayant de 1 à 8 atomes de carbone, un radical aryle, un radical arylalkyle ou alkylaryle dans lesquels le groupe alkyle a de 1 à 8 atomes de carbone ;
- $R^{10}$ représente un radical alkylène, linéaire ou ramifié, ayant de 1 à 4 atomes de carbone ;
- p est le nombre entier 0, 1, 2 ou 3 ; et
- lorsque p vaut 2 ou 3, les $R^{10}$ sont identiques ou différents.

**6.** Système d'amorçage selon la revendication 5, **caractérisé par le fait que**, dans la formule (III), M" est le lithium.

**7.** Système d'amorçage selon l'une des revendications 1 à 6, **caractérisé par le fait que** le rapport molaire alcoolate (2)/amorceur (1) est compris entre 1 et 20, notamment entre 2 et 10.

**8.** Procédé de (co)polymérisation de monomères (méth)acryliques par voie anionique, **caractérisé par le fait qu'**on conduit la polymérisation en présence d'un système d'amorçage tel que défini à l'une des revendications 1 à 7.

**9.** Procédé selon la revendication 8, **caractérisé par le fait qu'**il est conduit à une température de -100°C et + 100°C, de préférence à une température inférieure à -20°C pour les acrylates et à +30°C pour les méthacrylates.

**10.** Procédé selon l'une des revendications 8 et 9, **caractérisé par le fait qu'**il est conduit dans un solvant choisi parmi le benzène, le toluène, l'éthylbenzène, le tétrahydrofuranne, le diglyme, le tétraglyme, l'orthoterphényle, le biphényle, la décaline, la tétraline ou leurs mélanges, et notamment le toluène ou l'éthylbenzène ou bien un mélange toluène-tétrahydrofuranne ou éthylbenzène-tétrahydrofuranne contenant jusqu'à 10% en volume de tétrahydrofuranne.

**11.** Procédé selon l'une des revendications 8 à 10, **caractérisé par le fait qu'**il est conduit pendant une durée inférieure à 30 minutes.

**12.** Procédé selon l'une des revendications 8 à 11, **caractérisé par le fait que** les monomères (méth)acryliques sont choisis parmi les (méth)acrylates des formules respectivement :

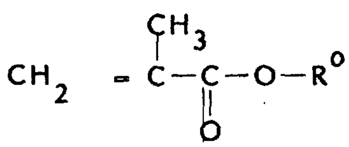 et 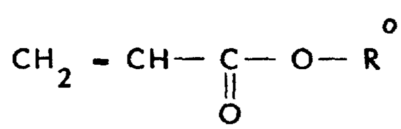

dans lesquelles $R^o$ est choisi parmi les radicaux alkyle en $C_1$-$C_{18}$, linéaires ou ramifiés, primaires, secondaires ou tertiaires, cycloalkyle en $C_5$-$C_{18}$, alcoxyalkyle, alkylthioalkyle, dans lesquels le groupe alkyle, linéaire ou ramifié, a de 1 à 18 atomes de carbone, aryle et arylalkyle, ces radicaux étant éventuellement substitués par au moins un atome de fluor et/ou au moins un groupe hydroxyle après protection de ce groupe hydroxyle ; les (méth)acrylates de glycidyle, de norbornyle, d'isobomyle, les mono- et di-(alkyl en $C_1$-$C_{18}$)-(méth)acrylamides.

**13.** Procédé selon la revendication 12, **caractérisé par le fait que** les monomères méthacryliques sont choisis parmi les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle, de β-hydroxy-éthyle, d'isobomyle, d'hydroxypropyle, d'hydroxybutyle.

**14.** Procédé selon la revendications 12, **caractérisé par le fait que** les monomères acryliques sont choisis parmi les acrylates de méthyle, d'éthyle, de n-propyle, d'isopropyle, de n-butyle, de sec.-butyle, de tert.-butyle, d'hexyle, de

2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.

**15.** Procédé selon l'une des revendications 8 à 13, **caractérisé par le fait qu'**on polymérise du méthacrylate de méthyle en présence d'un solvant apolaire ou majoritairement apolaire.

**16.** Procédé selon l'une des revendications 8 à 13 **caractérisé par le fait qu'**il conduit à un poly(méthacrylate de méthyle) ayant une masse molaire moyenne en nombre ($\overline{Mn}$) comprise entre 200 et $10^6$ g/mole et un indice de polymolécularité Ip ($\overline{Mw}/\overline{Mn}$) compris entre 1,05 et 2,6.

**17.** Procédé selon l'une des revendications 8 à 12, **caractérisé en ce qu'**il conduit à un polymère d'acrylate d'alkyle ayant une masse molaire moyenne en nombre ($\overline{Mn}$) comprise entre 500 et 500 000 g/mole et un indice de polymolécularité Ip compris entre 1,05 et 2,6.

**18.** Procédé selon l'une des revendications 8 à 14, **caractérisé par le fait qu'**on conduit une homopolymérisation ou bien une copolymérisation statistique ou séquencée ou en étoile de monomères (méth)acryliques.

**19.** Procédé conforme à l'une des revendications 8 à 13, **caractérisé en ce que** l'on obtient un poly(méthacrylate de méthyle) ayant une teneur en triades syndiotactiques supérieure ou égale à 70 %.

## Claims

**1.** Initiator system for the anionic (co)polymerization of (meth)acrylic monomers comprising (1) at least one alkali metal alkoxide as ligand and (2) either one or more monofunctional initiator(s) or one or more bifunctional initiator (s), **characterized in that** these initiators are silyl compounds chosen from:

- monofunctional silyl initiators of formula (I) :

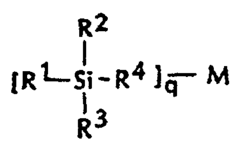

(I)

in which:

- $R^1$, $R^2$ and $R^3$ each independently represent a linear or branched alkyl radical comprising 1 to 8 carbon atoms;
- $R^4$ represents a linear or branched alkylene radical comprising 1 to 8 carbon atoms;
- M denotes an alkali metal or alkaline earth metal (valency q of 1 or 2), or else

- bifunctional silyl initiators of formula (II) :

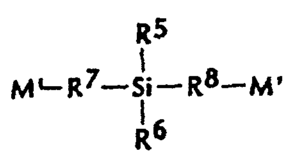

(II)

in which:

- $R^5$ and $R^6$ each independently represent a linear or branched alkyl radical comprising 1 to 8 carbon atoms;
- $R^7$ and $R^8$ each independently represent a linear or branched alkylene radical comprising 1 to 8 carbon atoms; and
- M' denotes an alkali metal.

**2.** Initiator system according to Claim 1, **characterized in that** $R^1$, $R^2$, $R^3$, $R^5$ and $R^6$ each represent a methyl.

**3.** Initiator system according to either of Claims 1 and 2, **characterized in that** $R^4$, $R^7$ and $R^8$ each represent a methylene.

**4.** Initiator system according to one of Claims 1 to 3, **characterized in that** M and M' each represent lithium.

**5.** Initiator system according to one of Claims 1 to 4, **characterized in that** the alkali metal alkoxide or alkoxides (1) are chosen from those of formula (III) :

$$ROM'' \qquad (III)$$

in which:

- M" represents an alkali metal and
- R represents a radical of formula (IV):

$$R^9(OR^{10})_p \qquad (IV)$$

in which:

- $R^9$ represents a linear or branched alkyl radical having from 1 to 8 carbon atoms, an aryl radical or an arylalkyl or alkylaryl radical in which the alkyl group has from 1 to 8 carbon atoms;
- $R^{10}$ represents a linear or branched alkylene radical having from 1 to 4 carbon atoms;
- p is the integer 0, 1, 2 or 3; and
- when p has the value 2 or 3, the $R^{10}$ groups are identical or different.

**6.** Initiator system according to Claim 5, **characterized in that**, in the formula (III), M" is lithium.

**7.** Initiator system according to one of Claims 1 to 6, **characterized in that** the alkoxide (1)/initiator (2) molar ratio is between 1 and 20, in particular between 2 and 10.

**8.** Process for the (co)polymerization of (meth)acrylic monomers by the anionic route, **characterized in that** the polymerization is carried out in the presence of an initiator system as defined in one of Claims 1 to 7.

**9.** Process according to Claim 8, **characterized in that** it is carried out at a temperature of between -100°C and +100°C, preferably at a temperature of less than -20°C for acrylates and of less than +30°C for methacrylates.

**10.** Process according to either of Claims 8 and 9, **characterized in that** it is carried out in a solvent chosen from benzene, toluene, ethylbenzene, tetrahydrofuran, diglyme, tetraglyme, ortho-terphenyl, biphenyl, decalin, tetralin or their mixtures, and in particular toluene or ethylbenzene or else a toluene-tetrahydrofuran or ethylbenzene-tetrahydrofuran mixture containing up to 10% by volume of tetrahydrofuran.

**11.** Process according to one of Claims 8 to 10, **characterized in that** it is carried out for a time of less than 30 minutes.

**12.** Process according to one of Claims 8 to 11, **characterized in that** the (meth)acrylic monomers are chosen from the (meth)acrylates with the respective formulae:

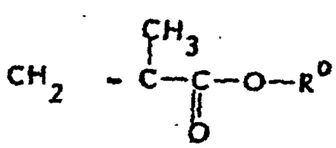

and

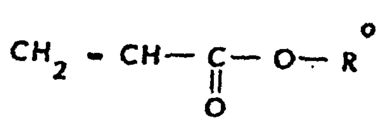

in which R° is chosen from $C_1$-$C_{18}$ alkyl radicals which are linear or branched and primary, secondary or tertiary, $C_5$-$C_{18}$ cycloalkyl radicals, alkoxyalkyl radicals, alkylthioalkyl radicals, in which the linear or branched alkyl group has from 1 to 18 carbon atoms, aryl radicals and arylalkyl radicals, these radicals optionally being substituted by at least one fluorine atom and/or at least one hydroxyl group after protection of this hydroxyl group; glycidyl, norbornyl and isobornyl (meth)acrylates, and mono- and di($C_1$-$C_{18}$ alkyl) (meth)acrylamides.

**13.** Process according to Claim 12, **characterized in that** the methacrylic monomers are chosen from methyl, ethyl, 2,2,2-trifluoroethyl, n-propyl, isopropyl, n-butyl, sec-butyl, tert-butyl, n-amyl, isoamyl, n-hexyl, 2-ethylhexyl, cyclphexyl, octyl, isooctyl, nonyl, decyl, lauryl, stearyl, phenyl, benzyl, β-hydroxyethyl, isobornyl, hydroxypropyl and hydroxybutyl methacrylates.

**14.** Process according to Claim 12, **characterized in that** the acrylic monomers are chosen from methyl, ethyl, n-propyl, isopropyl, n-butyl, sec-butyl, tert-butyl, hexyl, 2-ethylhexyl, isooctyl, 3,3,5-trimethylhexyl, nonyl, isodecyl, lauryl, octadecyl, cyclohexyl, phenyl, methoxymethyl, methoxyethyl, ethoxymethyl and ethoxyethyl acrylates.

**15.** Process according to one of Claims 8 to 13, **characterized in that** methyl methacrylate is polymerized in the presence of a nonpolar or predominantly nonpolar solvent.

**16.** Process according to one of Claims 8 to 13, **characterized in that** it results in a poly(methyl methacrylate) having a number-average molar mass ($\overline{Mn}$) of between 200 and $10^6$ g/mol and a polydispersity index PI ($\overline{Mw}/\overline{Mn}$) of between 1.05 and 2.6.

**17.** "Process according to one of Claims 8 to 12, **characterized in that** it results in an alkyl acrylate polymer having a number-average molar mass ($\overline{Mn}$) of between 500 and 500 000 g/mol and a polydispersity index PI of between 1.05 and 2.6.

**18.** Process according to any one of Claims 8 to 14, **characterized in that** a homopolymerization or else a random or block or star copolymerization of (meth)acrylic monomers is carried out.

**19.** Process in accordance with one of Claims 8 to 13, **characterized in that** a poly(methyl methacrylate) having a content of syndiotactic triads of greater than or equal to 70% is obtained.

**Patentansprüche**

**1.** Initiatorsystem für die anionische (Co)polymerisation von (Meth)acryl-Monomeren, das (1) mindestens ein Alkalimetallalkoholat als Ligand und (2) einen oder mehrere monofunktionelle Initiatoren oder einen oder mehrere bifunktionelle Initiatoren enthält, **dadurch gekennzeichnet, daß** die Initiatoren silylierte Verbindungen sind, die ausgewählt sind unter

- den monofunktionellen silylierten Initiatoren der Formel (I)

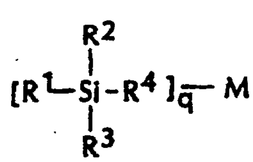

(I),

in der bedeuten:

- $R^1$, $R^2$, $R^3$ unabhängig voneinander eine geradkettige oder verzweigte Alkylgruppe, die 1 bis 8 Kohlenstoffatome enthält,
- $R^4$ eine geradkettige oder verzweigte Alkylengruppe, die 1 bis 8 Kohlenstoffatome enthält,
- M ein Alkali- oder Erdalkalimetall (Wertigkeit q von 1 oder 2),

und

- den bifunktionellen silylierten Initiatoren der Formel (II)

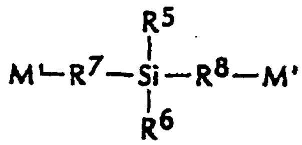

(II),

in der bedeuten:

- $R^5$ und $R^6$ unabhängig voneinander eine geradkettige oder verzweigte Alkylgruppe, die 1 bis 8 Kohlenstoffatome enthält,
- $R^7$ und $R^8$ unabhängig voneinander eine geradkettige oder verzweigte Alkylengruppe, die 1 bis 8 Kohlenstoffatome enthält,
- M' ein Alkalimetall.

**2.** Initiatorsystem nach Anspruch 1, **dadurch gekennzeichnet, daß** $R^1$, $R^2$, $R^3$, $R^5$ und $R^6$ Methyl bedeuten.

**3.** Initiatorsystem nach Anspruch 1 oder 2, **dadurch gekennzeichnet, daß** $R^4$, $R^7$ und $R^8$ Methylen bedeuten.

**4.** Initiatorsystem nach einem der Ansprüche 1 bis 3, **dadurch gekennzeichnet, daß** M und M' Lithium bedeuten.

**5.** Initiatorsystem nach einem der Ansprüche 1 bis 4, **dadurch gekennzeichnet, daß** das oder die Alkalimetallalkoholate (1) unter den Alkalimetallalkoholaten der Formel (III)

$$ROM'' \qquad (III)$$

ausgewählt sind, in der bedeuten:

- M'' ein Alkalimetall und
- R eine Gruppe der Formel (IV)

$$R^9(OR^{10})_p \qquad (IV),$$

worin bedeuten:

- $R^9$ eine geradkettige oder verzweigte Alkylgruppe, die 1 bis 8 Kohlenstoffatome aufweist, Aryl, Arylalkyl oder Alkylaryl, in denen die Alkylgruppe 1 bis 8 Kohlenstoffatome aufweist;
- $R^{10}$ eine geradkettige oder verzweigte Alkylengruppe, die 1 bis 4 Kohlenstoffatome aufweist;
- p die ganze Zahl 0, 1, 2 oder 3 und
- die Gruppen $R^{10}$ gleiche oder verschiedene Gruppen, wenn p die ganze Zahl 2 oder 3 ist.

**6.** Initiatorsystem nach Anspruch 5, **dadurch gekennzeichnet, daß** in der Formel (III) M'' Lithium bedeutet.

**7.** Initiatorsystem nach einem der Ansprüche 1 bis 6, **dadurch gekennzeichnet, daß** das Molverhältnis Alkoholat (2)/Initiator (1) im Bereich von 1 bis 20 und insbesondere 2 bis 10 liegt.

**8.** Verfahren zur anionischen (Co)polymerisation von (Meth)acryl-Monomeren, **dadurch gekennzeichnet, daß** die Polymerisation in Gegenwart eines Initiatorsystems durchgeführt wird, das wie in einem der Ansprüche 1 bis 7 definiert ist.

**9.** Verfahren nach Anspruch 8, **dadurch gekennzeichnet, daß** es bei einer Temperatur von -100 bis +100 °C und vorzugsweise bei einer Temperatur unter -20 °C für die Acrylate und unter +30 °C für die Methacrylate durchgeführt wird.

**10.** Verfahren nach einem der Ansprüche 8 und 9, **dadurch gekennzeichnet, daß** es in einem Lösemittel, das unter Benzol, Toluol, Ethylbenzol, Tetrahydrofuran, Diglyme, Tetraglyme, o-Terphenyl, Biphenyl, Decalin, Tetralin und Gemischen dieser Lösemittel ausgewählt wird, und insbesondere in Toluol oder Ethylbenzol oder einem Toluol-Tetrahydrofuran-Gemisch oder Ethylbenzol-Tetrahydrofuran-Gemisch, das bis zu 10 Vol.-% Tetrahydrofuran enthält, durchgeführt wird.

**11.** Verfahren nach einem der Ansprüche 8 bis 10, **dadurch gekennzeichnet, daß** es während eines Zeitraums von weniger als 30 min durchgeführt wird.

**12.** Verfahren nach einem der Ansprüche 8 bis 11, **dadurch gekennzeichnet, daß** die (Meth)acryl-Monomere ausgewählt werden unter den (Meth)acrylaten der Formel

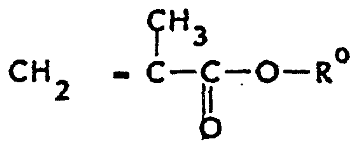 bzw. 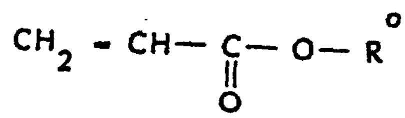 ,

in denen $R^0$ ausgewählt wird unter primärem, sekundärem oder tertiärem, geradkettigem oder verzweigtem $C_1$-$C_{18}$-Alkyl, $C_5$-$C_{18}$-Cycloalkyl, Alkoxyalkyl, Alkylthioalkyl, worin die Alkylgruppe, die geradkettig oder verzweigt ist, 1 bis 18 Kohlenstoffatome aufweist, Aryl und Arylalkyl, wobei diese Reste gegebenenfalls mit mindestens einem Fluoratom und/oder mindestens einer Hydroxygruppe nach dem Schutz dieser Hydroxygruppe substituiert sind; Glycidyl(meth)-acrylat, Norbomyl(meth)acrylat, Isobomyl(meth)acrylat, den Mono-($C_1$-$C_{18}$-alkyl)- und Di-($C_1$-$C_{18}$-alkyl)-(meth)acrylamiden.

**13.** Verfahren nach Anspruch 12, **dadurch gekennzeichnet, daß** die Methacryl-Monomere ausgewählt werden unter Methylmethacrylat, Ethylmethacrylat, 2,2,2-Trifluorethylmethacrylat, n-Propylmethacrylat, Isopropylmethacrylat, n-Butylmethacrylat, sek.-Butylmethacrylat, *tert*.-Butylmethacrylat, n-Amylmethacrylat, Isoamylmethacrylat, n-Hexylmethacrylat, 2-Ethylhexylmethacrylat, Cyclohexylmethacrylat, Octylmethacrylat, Isooctylmethacrylat, Nonylmethacrylat, Decylmethacrylat, Laurylmethacrylat, Stearylmethacrylat, Phenylmethacrylat, Benzylmethacrylat, β-Hydroxyethylmethacrylat, Isobornylmethacrylat, Hydroxypropylmethacrylat, Hydroxybutylmethacrylat.

**14.** Verfahren nach Anspruch 12, **dadurch gekennzeichnet, daß** die Acryl-Monomere ausgewählt werden unter Methylacrylat, Ethylacrylat, n-Propylacrylat, Isopropylacrylat, n-Butylacrylat, sek.-Butylacrylat, tert.-Butylacrylat, Hexylacrylat, 2-Ethylhexylacrylat, Isooctylacrylat, 3,3,5-Trimethylhexylacrylat, Nonylacrylat, Isodecylacrylat, Laurylacrylat, Octadecylacrylat, Cyclohexylacrylat, Phenylacrylat, Methoxymethylacrylat, Methoxyethylacrylat, Ethoxymethylacrylat und Ethoxyethylacrylat.

**15.** Verfahren nach einem der Ansprüche 8 bis 13, **dadurch gekennzeichnet, daß** Methylmethacrylat in Gegenwart eines unpolaren oder überwiegend unpolaren Lösemittels polymerisiert wird.

**16.** Verfahren nach einem der Ansprüche 8 bis 13, **dadurch gekennzeichnet, daß** es zu einem Poly(methylmethacrylat) führt, das ein Zahlenmittel des Molekulargewichts ($\overline{Mn}$) im Bereich von 200 bis $10^6$ g/mol und einen Polymolekularitätsindex Pi ($\overline{Mw}$ / $\overline{Mn}$) im Bereich von 1,05 bis 2,6 aufweist.

**17.** Verfahren nach einem der Ansprüche 8 bis 12, **dadurch gekennzeichnet, daß** es zu einem Alkylacrylat-Polymer führt, das ein Zahlenmittel des Molekulargewichts (Mn) im Bereich von 500 bis 500 000 g/mol und einen Polymolekularitätsindex Pi im Bereich von 1,05 bis 2,6 aufweist.

**18.** Verfahren nach einem der Ansprüche 8 bis 14, **dadurch gekennzeichnet, daß** eine statistische oder sequentielle oder zur sternförmigen Vernetzung führende Homopolymerisation oder Copolymerisation von (Meth)acryl-Monomeren durchgeführt wird.

**19.** Verfahren nach einem der Ansprüche 8 bis 13, **dadurch gekennzeichnet, daß** ein Poly(methylmethacrylat) erhalten wird, das einen Gehalt an syndiotaktischen Triaden von 70 % oder darüber aufweist.